# EUROPÄISCHE PATENTANMELDUNG

(11) **EP 2 811 620 A1**
(43) Veröffentlichungstag der Anmeldung: **10.12.2014**
(21) Anmeldenummer: 13170734.1
(22) Anmeldetag: 06.06.2013
(51) Int. Cl.: H02K 1/32, H02K 3/12

(54) **Kühlungseinrichtung für eine Wicklung einer elektrischen Maschine**

(71) Anmelder: Siemens Aktiengesellschaft, 80333 München (DE)
(72) Erfinder: Jäkel, Christian, 45468 Mülheim an der Ruhr (DE)

(57) **Zusammenfassung**

Die Erfindung betrifft eine Kühlungseinrichtung (1) für eine Wicklung einer elektrischen Maschine, wobei zwischen einer Nutwand (4) und einem Leiterstab (2) ein Kühlungskanal (5) ausgebildet ist, der schräg von der Unterseite (7) zur Oberseite (8) verläuft.

## Beschreibung

Die Erfindung betrifft eine Kühlungseinrichtung für eine Wicklung einer elektrischen Maschine, mit mehreren übereinander angeordneten Leiterstäben, wobei die Leiterstäbe in einer Nut angeordnet sind.

Die im Läufer entstehenden Verluste in Form von Wärme, die bei der Umwandlung von mechanischer in elektrischer Energie im Läufer entstehen, müssen dem Läufer möglichst wirksam entzogen werden, damit der Läufer aufgrund von Isolierwerkstoffen unterhalb einer Grenztemperatur betrieben werden kann. Dabei sollte eine möglichst große Wärmeabfuhr möglich sein, damit die Auslastung des Läufers höher ist. In herkömmlichen Generatoren werden radiale oder axiale Direktkühlungskanäle eingesetzt. Dabei sind für die radiale Direktkühlung radiale Gasführungskanäle durch die Kupferleiter eingebracht. Bei der axialen Direktkühlung befinden sich axial in den Kupferleitern angeordnete Kühlkanäle.

Elektrische Maschinen wie z.B. elektrische Generatoren werden u. a. zur kommunalen Energieversorgung eingesetzt. Im Wesentlichen umfasst ein elektrischer Generator einen Läufer mit einer Läuferwicklung sowie einen um den Läufer angeordneten Stator mit einer Statorwicklung. Im Betrieb strömt ein elektrischer Strom in der Läuferwicklung und führt zu einem magnetischen Feld, das infolge einer Rotation eine elektrische Spannung in der Ständerwicklung induziert.

Die elektrischen Ströme in der Läuferwicklung und in der Ständerwicklung sind vergleichsweise hoch, so dass eine Kühlung erforderlich ist. In der Regel werden Kühlkanäle in den Leiterstäben angeordnet und mit einem Kühlmedium wie beispielsweise Wasserstoff oder Luft beströmt.

Es ist Aufgabe der Erfindung, eine weitere Kühlungsmöglichkeit für eine elektrische Maschine anzugeben.

Gelöst wird diese Aufgabe durch eine Kühlungseinrichtung für eine Wicklung einer elektrischen Maschine, mit mehreren übereinander angeordneten Leiterstäben, wobei die Leiterstäbe in einer Nut angeordnet sind, wobei ein Kühlungskanal zwischen der Nutwand und den Leiterstäben angeordnet ist.

Mit der erfindungsgemäßen Lösung wird der Vorteil erreicht, dass mit einem seitlich an den Leiterstäben angeordneten Konvektionskühlkanal eine bessere Kühlung möglich ist.

Da die zu kühlende Leiterstaboberfläche wesentlich vergrößert wird, werden die Leiter besser gekühlt. Außerdem wird durch eine verbesserte Eigenförderung der Volumenstrom vergrößert, was zu einer verbesserten Kühlung führt. Dadurch kann durch die kompaktere Bauart, wobei der Nutgrundkanal entfallen kann, eine verbesserte Kühlung entstehen und somit kann mit festen Abmessungen mehr Kupfer verbaut werden, wodurch die Auslastung des Läufers steigt.

Besonders vorteilhaft verringert sich durch die Erfindung die Tiefe der Nut im Läufer. Eine Bearbeitung der Leiterstäbe und des Isolierwerkstoffs zwischen den einzelnen Teilleitern entfällt.

Vorteilhafte Weiterbildungen sind in den Unteransprüchen angegeben.

In einer ersten vorteilhaften Weiterbildung weist der Kühlungskanal mehrere übereinander angeordnete Teilkühlungskanäle auf.

Diese Teilkühlungskanäle sind strömungstechnisch getrennt voneinander ausgebildet. Dies führt zu dem Vorteil, dass jeder einzelne Teilkühlungskanal eine individuelle Strömungsrichtung aufweisen kann und dadurch ein optimaler Austausch an Wärme möglich ist.

Zwischen den Teilkühlungskanälen sind vorteilhafterweise Teilkühlungskanalwände ausgebildet.

Vorteilhaft weisen die Leiterstäbe eine Unterseite und eine Oberseite auf und die Teilkühlungskanäle sind im seitlichen Querschnitt gesehen, schräg zur Rotationsachse verlaufend, ausgebildet. Im Betrieb wirkt eine Fliehkraft, die dazu führt, dass die Kühlluft in radialer Richtung bewegt wird. Dadurch kann eine bessere Kühlungsmöglichkeit erreicht werden.

In einer weiteren vorteilhaften Weiterbildung ist der Neigungswinkel α der schrägen Teilkühlungskanäle zwischen α1 und α2, wobei α1 Werte zwischen 10° und 40° und a2 Werte zwischen 80° und 50° annehmen kann. Insbesondere kann der Neigungswinkel der schrägen Teilkühlungskanäle folgende Werte annehmen: 10° bis 80°, 15° bis 75°, 20° bis 70°, 25° bis 65°, 30° bis 60°, 35° bis 55° oder 40° bis 50°.

Vorteilhafterweise verläuft der Teilkühlungskanal von der Unterseite aus zunächst schräg, anschließend parallel zur Rotationsachse und danach schräg zur Oberseite.

Die Erfindung wird nun anhand eines Ausführungsbeispiels näher erläutert.

Darin zeigen in schematischer Weise:
Figur 1 eine Querschnittansicht der erfindungsgemäßen Leiterstäbe,
Figur 2 eine Seitenansicht der erfindungsgemäßen Kühleinrichtung
Figur 3 eine Querschnittansicht der Nut.

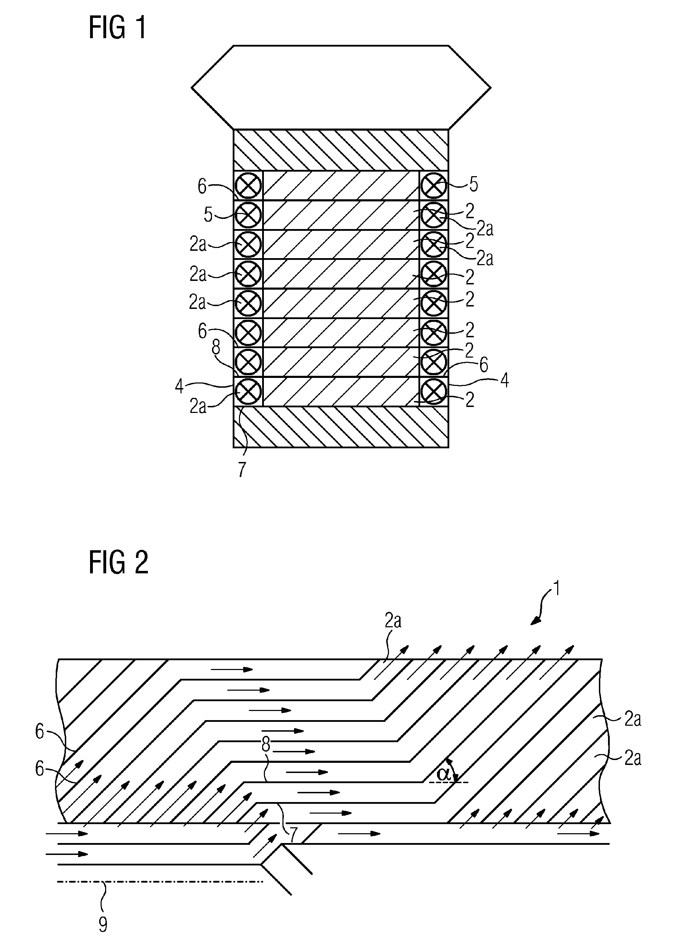

Figur 1 zeigt eine Querschnittansicht der Kühlungseinrichtung 1. Die Kühlungseinrichtung 1 ist für eine nicht näher dargestellte Wicklung einer elektrischen Maschine ausgebildet und umfasst mehrere übereinander angeordnete Leiterstäbe 2. Die Leiterstäbe 2 sind in einer Nut 3 angeordnet. Links und rechts der Leiterstäbe 2 sind Nutwände 4 ausgebildet. Zwischen der Nutwand 4 und dem Leiterstab 2 ist ein Kühlungskanal 5 ausgebildet. In der in Figur 1 dargestellten Ausführungsform ist jeweils ein Kühlungskanal 5 links von den Leiterstäben 2 und rechts von den Leiterstäben 2 angeordnet. Der Kühlungskanal 5 weist mehrere übereinander angeordnete Teilkühlungskanäle 2a auf. Der Übersichtlichkeit wegen sind lediglich sechs Teilkühlungskanäle mit dem Bezugszeichen 2a versehen. Die Teilkühlungskanäle 2a sind strömungstechnisch getrennt voneinander ausgebildet, wobei zwischen den Teilkühlungskanälen 2a Teilkühlungskanalwände 6 ausgebildet sind. Der Übersichtlichkeit wegen sind lediglich ein paar Teilkühlungskanalwände exemplarisch mit dem Bezugszeichen 6 versehen.

In Figur 2 ist eine Seitenansicht der Kühlungseinrichtung 1 zu sehen. Die Leiterstäbe 2 weisen eine Unterseite 7 und eine Oberseite 8 auf. Die Teilkühlungskanäle 2a sind im seitlichen Querschnitt durch eine Rotationsachse 9 der elektrischen Maschine gesehen, schräg zur Rotationsachse 9 verlaufend ausgebildet.

Der Teilkühlungskanal 2a verläuft von der Unterseite 7 aus zunächst schräg, anschließend parallel zur Rotationsachse 9 und anschließend bis zur Oberseite 8 wieder schräg.

Die Wicklung ist erfindungsgemäß für einen Läufer einer elektrischen Maschine ausgebildet. Die elektrische Maschine ist hierbei jeweils als elektrischer Generator ausgebildet.

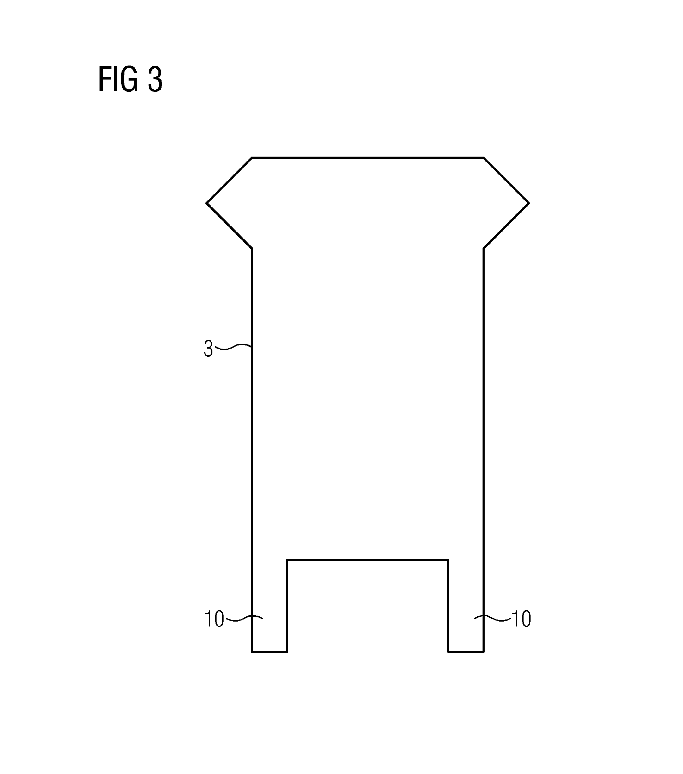

Die Figur 3 zeigt eine Querschnittansicht der Nut 3. Auf die Darstellung der Leiterstäbe 2 und Teilkühlungskanäle 2a wurde verzichtet. Die Nut 3 weist eine Versorgungsnut 10 auf, in die ein Kühlungsmedium strömt und die Teilkühlungskanäle 2a mit Kühlmedium versorgt. Als Kühlmedium dient Luft oder Wasserstoff.

## Patentansprüche

1. Kühlungseinrichtung (1) für eine Wicklung einer elektrischen Maschine,
mit mehreren übereinander angeordneten Leiterstäben (2), wobei die Leiterstäbe (2) in einer Nut (3) angeordnet sind, **dadurch gekennzeichnet, dass**
ein Kühlungskanal (5) zwischen der Nutwand (4) und den Leiterstäben (2) angeordnet ist.

2. Kühlungseinrichtung (1) nach Anspruch 1,
wobei der Kühlungskanal (5) mehrere übereinander angeordnete Teilkühlungskanäle (2a) aufweist.

3. Kühlungseinrichtung (1) nach Anspruch 2,
wobei die Teilkühlungskanäle (2a) strömungstechnisch getrennt voneinander ausgebildet sind.

4. Kühlungseinrichtung (1) nach Anspruch 2 oder 3,
wobei zwischen den Teilkühlungskanälen (2a) Teilkühlungswände (6) ausgebildet sind.

5. Kühlungseinrichtung (1) nach einem der vorhergehenden Ansprüche,
wobei die Leiterstäbe (2) eine Unterseite (7) und eine Oberseite (8) aufweisen und die Teilkühlungskanäle (2a), im seitlichen Querschnitt durch eine Rotationsachse (9) der elektrischen Maschine gesehen, schräg zur Rotationsachse (9) verlaufend ausgebildet sind.

6. Kühlungseinrichtung (1) nach Anspruch 5,
wobei der Neigungswinkel α der schrägen Teilkühlungskanäle (2a) folgende Werte annehmen kann: 10° bis 80°, 15° bis 75°, 20° bis 70°, 25° bis 65°, 30° bis 60°, 35° bis 55° oder 40° bis 50°.

7. Kühlungseinrichtung (1) nach Anspruch 5 oder 6,
wobei der Teilkühlungskanal (2a) von der Unterseite (7) aus zunächst schräg verläuft, anschließend parallel zur Rotationsachse (9) verläuft und anschließend bis zur Oberseite (8) schräg verläuft.

8. Kühlungseinrichtung (1) nach einem der vorhergehenden Ansprüche,
wobei die Wicklung für einen Läufer der elektrischen Maschine ausgebildet ist.

9. Kühlungseinrichtung (1) nach einem der vorhergehenden Ansprüche,
wobei die elektrische Maschine als elektrischer Generator ausgebildet ist.
